# EUROPEAN PATENT SPECIFICATION

(11) **EP 0 595 574 B1**
(45) Date of publication and mention of the grant of the patent: **02.01.1997**
(21) Application number: 93308474.1
(22) Date of filing: 25.10.1993
(51) Int. Cl.: C08F 110/02, C08F 4/651, C08F 4/654

(54) **Process for the preparation of a Ziegler-Natta type catalyst**
Verfahren zur Herstellung von einem Ziegler-Natta-Katalysator
Procédé de préparation d'un catalyseur de type Ziegler-Natta

(30) Priority: 26.10.1992 EP 92430026; 18.06.1993 FR 9307718
(43) Date of publication of application: 04.05.1994
(73) Proprietor: BP Chemicals Limited, London EC2M 7BA (GB); BP CHEMICALS S.N.C., 92400 Courbevoie (FR)
(72) Inventor: Berardi, Alain, BP Chemicals S.N.C., F-92400 Courbevoie (FR); Collomb, Joelle, BP Chemicals S.N.C., F-92400 Courbevoie (FR); Daire, Erick, BP Chemicals S.N.C., F-92400 Courbevoie (FR); Speakman, John Gabriel, BP Chemicals S.N.C., F-92400 Courbevoie (FR)
(74) Representative: Hymers, Ronald Robson

(56) References cited:
- EP-A- 0 206 893
- EP-A- 0 240 254
- EP-A- 0 261 808
- EP-A- 0 453 088
- EP-A- 0 480 434

## Description

The present invention relates to a process for the preparation of a Ziegler-Natta type catalyst which is based on a granular support. The catalyst is suitable for the polymerisation of olefins, such as ethylene, in particular in the gaseous phase.

It is known, according to European patent application EP-A-453 088, to prepare a Ziegler-Natta type catalyst comprising magnesium, chlorine and titanium and a granular support based on a refractory oxide. More particularly, the preparation of the catalyst involves the three stages carried out in a liquid hydrocarbon medium, comprising (a) an initial stage, of bringing into contact the granular support with a dialkylmagnesium and optionally a trialkylaluminium compound, (b) a second stage, of bringing into contact the product of the first stage with a monochloro-organic compound and (c) a third stage of bringing into contact the product arising out of the second stage with at least one tetravalent titanium compound. The catalyst obtained is suitable for the manufacture of polyolefins such as polyethylene. However, it has the drawback of not being suited to the manufacture of polyethylene, in particular copolymers of ethylene such as linear low density polyethylene, having a narrow molecular weight distribution and a high bulk density. Furthermore, the homogeneity of copolymer produced is not high enough.

US-A-5075270 relates to a process for preparing a transition metal component for an olefin polymerisation catalyst system in which an aluminosiloxane is reacted with a dialkyl magnesium compound to form an organic magnesium-aluminium-silicon reaction product after which the reaction product is subjected to chlorination and treatment with a transition metal compound. The transition metal component may be prepared in the presence of a porous inorganic or organic support.

According to the present invention, a process has now been found for the preparation of a Ziegler-Natta type catalyst useful for producing polyethylenes, in particular linear low density polyethylenes, which have a relatively narrow molecular weight distribution and a high bulk density. Homogeneity of the copolymer of ethylene is improved.

The subject matter of the present invention is, therefore, a process for the preparation of a Ziegler-Natta type catalyst having a granular support characterised in that it comprises contacting the granular support with :
(a) an organosilicon compound,
(b) a dialkylmagnesium and optionally a trialkylaluminium compound,
(c) a monochloro-organic compound, and
(d) with at least one tetravalent titanium compound.

The granular support used in the present invention is based on a refractory oxide. It may contain hydroxyl functional groups. The granular support can have a specific surface area (BET) of 50 to 1 000 m2/g, e.g. 100 to 600 m2/g and a pore volume of 0.5 to 5 ml/g, e.g. 1 to 3 ml/g. The quantity of hydroxyl groups in the support depends on the support employed, on its specific surface area, on the physico-chemical treatment and on the drying to which it may have been subjected beforehand. A granular support which is ready for use generally contains from 0.1 to 5, preferably from 0.5 to 3 millimols of hydroxyl groups per gram. The granular support is preferably anhydrous at the time of its use in the catalyst preparation. For this purpose, it is preferably dehydrated by means which are known per se, such as a heat treatment ranging from 100°C to 950°C, e.g. 150°C to 800°C. The support can be chosen, in particular, from a silica, an alumina, a silica-alumina, or a mixture of these oxides. It can consist of particles which have a weight-average diameter ranging from 20 to 250 microns, preferably 30 to 200 microns, especially 50 to 150 microns. Preferably, particles of the support used, are spherical or spheroidal.

The use of a silica is preferred, especially those sold by the Crosfield Company (UK) under the commercial references "so 490" and "ES70" or by W R Grace Company (Germany) under the commercial references "SG 332" and "SD 3217".

According to the process of the invention the granular support is contacted with an organosilicon compound. The organosilicon compound can have the general formula SiRmX4-m, in which R is an alkyl group having for example from 1 to 6 carbon atoms, X a halogen atom such as chlorine or bromine, or an alkoxy group having for example from 1 to 6 carbon atoms and m is from 1 to 4, preferably from 1 to 3. Silanes such as diethoxydimethylsilane (DEODMS), methyltrimethoxysilane, methyltriethoxysilane and tetraethoxysilane can be used. The organosilicon compound can also be a compound comprising trialkylsilyl radicals and amine groups, preferably a silazane or a disilazane such as hexamethyldisilazane (CH3)₃Si-NH-Si(CH3)₃ (HMDS).

The contact between the support and the organosilicon compound is the first step in the preparation of the catalyst. Thus, the organosilicon compound can advantageously be used in order to decrease the content of hydroxyl functional groups in the support by reacting with the said groups. The contact can be, for example, carried out in a liquid hydrocarbon using from 0.1 to 10 mols, preferably from 0.5 to 5 mols, of organosilicon compound per g of granular support, at a temperature ranging from 20 to 120°C, preferably 50 to 100°C. This can take from 10 minutes to 10 hours. At the end of this contact step the granular support obtained can be washed once or several times with a liquid hydrocarbon.

The dialkylmagnesium compound is preferably of general formula MgR₁R₂ optionally mixed or complexed with a trialkylaluminium of general formula AlR₃R₄R₅ in which R₁, R₂, R₃, R₄ and R₅ are identical or different alkyl radicals containing from 1 to 12 carbon atoms, preferably from 2 to 8 carbon atoms. The quantity of trialkylaluminium used preferably does not exceed a molar ratio of 1/1 relative to the dialkylmagnesium. In particular the molar ratio is from 0.01/1 to 1/1, e.g. 0.1/1 to 0.5/1. Dibutylmagnesium, dihexylmagnesium, butylethylmagnesium, ethylhexylmagnesium or butyloctylmagnesium is preferably employed. The preferred trialkylaluminium compound is triethylaluminium. The contact step between the support and the dialkylmagnesium is performed following the contact between the support and the organosilicon compound. It can be, for example, carried out as described in EP-A-453 088. Typically, from 0.1 to 8, preferably from 0.5 to 4 millimols of dialkylmagnesium per g of granular support are used. The support obtained can contain from 0.1 to 4, preferably from 0.5 to 2.5 millimols of magnesium per g of support. It can be washed with a liquid hydrocarbon.

The process comprises contacting the support with a monochloro-organic compound. This compound can be a secondary or preferably tertiary alkyl monochloride containing 3 to 19, preferably 3 to 13 carbon atoms and having the following general formula R₆R₇R₈CCl in which R₆ and R₇ are identical or different alkyl radicals containing from 1 to 6, e.g. 1 to 4 carbon atoms such as methyl, ethyl or n-propyl and R₈ is a hydrogen atom or, preferably, an alkyl radical containing from 1 to 6, e.g. 1 to 4 carbon atoms, identical to or different from R₆ and R₇, such as methyl, ethyl or n-propyl. Secondary propyl chloride, secondary butyl chloride, but especially tertbutyl chloride are preferred.

The monochloro-organic compound can also be a secondary or preferably tertiary cycloalkyl monochloride of general formula: 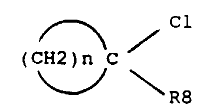 in which R₈ is a hydrogen atom or, preferably, an alkyl radical containing from 1 to 6, e.g. 1 to 4 carbon atoms such as methyl or ethyl and n is a number from 4 to 8, e.g. 5 to 8, especially 5. Such a compound can be cyclohexyl chloride or 1-methyl-1 chlorocyclohexane.

The monochloro-organic compound can also be a compound containing at least one aryl radical, of general formula:

R₉R₁₀R₁₁CCl

in which R₉ is an aryl radical containing from 6 to 16, e.g. 6 to 10 carbon atoms and R₁₀ and R₁₁ are identical or different radicals chosen from hydrogen, alkyl radicals containing from 1 to 6, e.g. 1 to 4 carbon atoms such as methyl, ethyl or n-propyl, and aryl radicals containing from 6 to 16, e.g. 6 to 10 carbon atoms, identical to or different from R₉. The aryl radicals for R₉, R₁₀ and/or R₁₁ are usually aromatic hydrocarbyl groups such as phenyl, toluyl or naphthyl. Benzyl chloride and 1-phenyl-1-chloroethane are preferred.

The contact step between the granular support and the monochloro-organic compound is in most cases preferably carried out following the contact step between the support and the dialkylmagnesium compound and can, for example, be carried out as described in EP-A-453 088. Typically, from 0.2 to 10 millimols of monochloro-organic compound are used per g of granular support.

The process comprises also contacting the support with a tetravalent titanium compound. The titanium compound is preferably soluble in the hydrocarbon liquid medium in which the catalyst is prepared. Preferably, the tetravalent titanium compound is of general formula:

Ti(OR)nX4-n

in which R is an alkyl radical containing from 1 to 6, e.g. 2 to 4 carbon atoms, e.g. methyl, ethyl, propyl, isopropyl or butyl, X is a chlorine or bromine atom, n is whole or fractional from 0 to 4, e.g. 0 to 3. The use of titanium tetrachloride and dibutoxy titanium dichloride is preferred. However, when the catalyst is used for the manufacture of a linear low density polyethylene, it is preferred to use a low halogenated titanium compound, for example, a compound having the above formula in which n is greater than 0.5. Preferably, from 0.05 to 1 mol of titanium is used per mol of magnesium in the support.

According to one particular embodiment of the invention, the granular support can be contacted with at least one electron-donor compound, preferably free from labile hydrogen. The electron-donor compound can be an ether. The ether, can be an aliphatic ether, such as propyl ether or butyl ether; a cyclic ether, such as tetrahydrofuran, or dioxane; a polyether, preferably a diether such as dimethyl ethylene glycol ether or 2,2 dimethoxypropane. The electron-donor compound can also be an aliphatic ester, such as ethyl acetate ; an aromatic ester, such as ethylbenzoate ; an aromatic polyester such as dibutyl phtalate ; a tertiary amine, such as triethylamine ; an amide such as dimethylformamide ; a silane, such as tetraethoxysilane, methyltriethoxysilane, methyltrimethoxysilane or dichlorodiethoxysilane ; a silazane, such as hexamethyldisilazane ; or orthoester such as triethylorthoacetate. Typically, the electron-donor compound is tetrahydrofuran, triethylorthoacetate, dimethylformamide or tetraethoxysilane.

The contact between the support and the electron-donor compound is preferably performed with a support which has been contacted with a monochloro-organic compound and also preferably prior to contacting the support with the titanium compound. It can be for example carried out using from 0.01 to 2, preferably from 0.05 to 1 mols of electron-donor compound per mol of magnesium in the granular support. It is preferably carried out with stirring in a liquid hydrocarbon, such as n-hexane or n-heptane or a mixture of the two. This contact step can take place at a temperature ranging from 0 to 120°C, preferably 20 to 100°C. This can take from 10 minutes to 10 hours. To carry out this step it is possible to add the electron-donor compound to a stirred suspension of the granular support. It can take from 1 to 5 hours, preferably from 15 minutes to 2 hours. It is also possible to stir a suspension of the granular support into a liquid hydrocarbon which already contains the electron-donor compound. The electron-donor compound can be used in the pure form or as a solution in a liquid hydrocarbon. It can also be used in the form of a mixture or of a complex with the titanium compound. At the end of this contact step the granular support can be washed once or several times with a liquid hydrocarbon.

The process can also comprise one or more contacts between the granular support and an organometallic compound, in addition to the dialkylmagnesium compound, which can be used to reduce the titanium compound. The reduction of the titanium compound can be partial. The organometallic compound is typically a compound of a metal belonging to group II or III of the periodic classification of the elements. For example, it is possible to use organoaluminium, organomagnesium or organozinc compounds. It is preferred to use triethylaluminium, triisobutylaluminium, tri-n-hexylaluminium or tri-n-octylaluminium. When trimethylaluminium or dimethylaluminium chloride is used, the activity of the catalyst is much improved.

The contact step between the support and the organometallic compound is preferably performed prior to contacting the support with the titanium compound. It is advantageously also performed after contacting the support with the monochloro-organic compound. The step can be carried out in a liquid hydrocarbon, such as n-heptane, using from 0.1 to 5 mols, per mol of magnesium in the support. Typically, from 0.2 mol of organometallic compound per mol of magnesium in the suppport is used. When an electron-donor compound is used, it is recommended to use the organometallic compound in a quantity such that the molar ratio between the organometallic compound and the electron donor is from 1 to 5, preferably around 2. It is preferably carried out at a temperature from 20 to 120°C, preferably 20 to 100°C and can take from 10 minutes to 10 hours. The obtained support can be washed once or several times with a liquid hydrocarbon.

When the support has been contacted with an electron-donor compound and with an organometallic compound, the catalyst obtained allows the manufacture of a polymer having an improved morphology. Thus, the polymer can have a bulk density from 0.42 to 0.50 g/cm3.

According to the present invention, the support or the final catalyst, can be dried for example at a temperature from 20 to 200°C, preferably from 50 to 150°C. The drying operation can be carried out by passing a stream of dry nitrogen through the stirred support or final catalyst. Preferably, the support is dried after being contacted with an electron-donor compound. It also can be dried after being contacted with an organometallic compound.

Thus, the present invention comprises a process for the preparation of a Ziegler-Natta type catalyst comprising :
- (a) contacting a granular support with an organosilicon compound,
- (b) contacting the support resulting from step (a) with a dialkylmagnesium and optionally a trialkylaluminium compound,
- (c) contacting the support resulting from step (b) with a monochloro-organic compound, and
- (d) contacting the support resulting from step (c) with a tetravalent titanium compound.

The invention also comprises a process for the preparation of a Ziegler-Natta type catalyst comprising:
- (a) contacting a granular support with an organosilicon compound,
- (b) contacting the support resulting from step (a) with a dialkylmagnesium and optionally with a trialkylaluminium compound,
- (c) contacting the support resulting from step (b) with a monochloro-organic compound,
- (d) contacting the support resulting from step (c) with an electron-donor compound,
- (e) contacting the support resulting from step (d) with an organometallic compound, and
- (f) contacting the support resulting from step (e) with a tetravalent titanium compound.

Catalysts of the present invention contain typically from 0.1 to 1 millimol of titanium per g of granular support. Titanium can be in a valence state less than 4.

The catalyst can be used for polymerising or copolymerising under industrial conditions an olefin having for example from 2 to 10 carbon atoms, such as ethylene, propylene, 1-butene, 1-hexene, 4-methyl 1-pentene. The catalyst is well adapted for producing ethylene polymers or copolymers having preferably a relative density from 0.880 to 0.970 and more particularly linear low density polyethylenes having a relative density from 0.910 to 0.930. The catalyst can be used in the form of a prepolymer containing, for example, from 1 to 200 g, preferably from 10 to 100 g, of polymer per millimol of titanium.

The (co-)polymers can be produced in suspension in a liquid hydrocarbon, and preferably in the gas phase in a fluidised and/or stirred bed reactor. Catalyst is usually used in the presence of a cocatalyst which can be an organometallic compound of a metal of groups I to III of the periodic table. Typically, the cocatalyst is trimethylaluminium or triethylaluminium.

The (co-)polymers obtained have a low content of titanium, in particular less than 10 ppm of titanium, due to the good activity of the catalyst. They can have a melt index measured at 190°C under a load of 2.16 kg (MI2.16) between 0.01 and 200 g per 10 minutes. They have a relatively narrow molecular weight distribution for example between 2.5 and 4.5, and in most cases between 3 and 4. Copolymers of ethylene with a comonomer, such as linear low density polyethylenes, are generally homogen, i.e. the distribution of the comonomer along the polymer is statistical.

Particles of polymer have a good morphology. Preferably, they are spherical or spheroidal and can have a weight-average diameter from 300 to 1200 µm. Due to their good morphology, particles consist of a powder which can have a high bulk density, for example, ranging from 0.37 to 0.50 g/cm³. Generally, this powder has a low content of fines particles.

### Method for the determination of weight-average diameter (Dm) and number-average diameter (Dn) of particles

According to the invention, the weight-average diameter (Dm) and the number-average diameter (Dn) of the particles of the support are determined according to the method described in EP-A-336 545.

### Determination of the molecular weight distribution

The molecular weight distribution of a (co-)polymer is calculated in accordance with the ratio of the weight-average molecular weight, Mw, to the number-average molecular weight, Mn, of the (co-)polymer, from a molecular weight curve obtained by means of a Waters 150 C (R) gel permeation gel chromatograph (High Temperature Size Exclusion Chromatograph), the operating conditions being as follows:
solvent : 1, 2, 4-trichlorobenzene
solvent flow rate : 1 ml/minute
three Shodex (R) AT 80M/S columns temperature : 150°C
sample concentration : 0.1 % by weight
injection volume : 500 microlitres
detection by a refractometer integral with the chromatograph calibration with the aid of a high density polyethylene sold by BP Chemicals S.N.C. under the trade name Rigidex 6070 EA (R) having a Mw = 65 000, Mw/Mn = 4, MI2.16 = 6 and a high density polyethylene having Mw = 210 000 and Mw/Mn = 17.5.

The following examples illustrate the invention.

### Example 1

### Preparation of a Catalyst (D)

A granular support was used made up of a silica powder "SG332" (R) sold by the company GRACE (Germany) having a specific surface (BET) of 325 m2/g and a pore volume of 1.84 ml/g. It was made up of particles having an average diameter by weight of 77 microns. It was dried for 5 hours at 500°C. The following operations were carried out in an inert nitrogen atmosphere.

In a 1 litre reactor of stainless steel, provided with an agitating device rotating at 250 rpm, there was introduced 600 ml of n-hexane, 60 g of dried silica and slowly over one hour 180 millimols of hexamethyldisilazane (HMDS) at a temperature of 23°C. The mixture obtained in this way was agitated for one hour at 23°C. The solid product (A) obtained in this way was washed three times with 600 ml of n-hexane at 23°C.

Then, over a period of 30 minutes, 90 millimols of dibutylmagnesium was slowly fed in at a temperature of 23°C. The mixture obtained in this way was agitated for one hour at 23°C. The solid product (B) obtained in this way was washed three times with 600 ml of n-hexane at 23°C and after such washing contained 1.5 millimols of magnesium per gramme of silica.

The reactor containing the solid product (B) in suspension in 600 ml of n-hexane was then heated to 50°C. Whilst being agitated, 180 millimols of tertbutyl chloride was added into the reactor over one hour. At the end of this time, the mixture was agitated for one hour at 50°C, then cooled down to ambient temperature (23°C). The solid product (C) obtained was washed three times with 600 ml of n-hexane at 23°C. After such washing, it contained (per gramme of silica) 1.5 millimols of magnesium, 3.0 millimols of chlorine and had no basic reducing function vis-a-vis the titanium tetrachloride.

The reactor was then heated to 50°C and over 30 minutes 15 millimols of titanium tetrachloride was added. The mixture obtained was then agitated for one hour at 50°C, then cooled down to ambient temperature (23°C). The solid product (D) obtained contained (per gramme of silica) 1.5 millimols of magnesium, 4.5 millimols of chlorine and 0.54 millimol of titanium in the tetravalent state.

### Example 2

### Polymerisation of ethylene in a reactor with a mechanically agitated bed

A stainless steel reactor of 2.6 litres was kept under 0.1 MPa nitrogen and equipped with an agitator for dry powder rotating at 350 rpm. Into the reactor there was added by way of charge powder 200 g of a polyethylene powder which was completely anhydrous and derived from a previous reaction, and then 10 millimols of triethylaluminium and 1.0 g of the catalyst (D). The reactor was heated to 80°C and into it was then added hydrogen until a total pressure of 0.25 MPa was obtained and then ethylene was introduced until a total pressure of 0.75 MPa was obtained. Then, ethylene was fed in to maintain the total pressure at 0.75 MPa. At the end of 2 hours 30 minutes, 600 g of a polyethylene having a MI2.16 of 3.93 g/10 minutes and a molecular weight distribution of 4.2 was recovered.

### Example 3 (Comparative)

### Preparation of a Catalyst (H)

A granular support made up of a silica powder "SG332" (R) sold by the Company GRACE (Germany) was used, having a specific surface (BET) of 325 m2/g and a pore volume of 1.84 ml/g. It was made up of particles having an average diameter by weight of 77 microns. It was dried for 5 hours at 500°C. The following operations are carried out in an inert nitrogen atmosphere.

Into a 1 litre stainless steel reactor, equipped with an agitation device rotating at 250 rpm, there was introduced 600 ml of n-hexane, 60 g of dried silica and slowly over 30 minutes 90 millimols of dibutylmagnesium, at a temperature of 23°C. The solid product (E) obtained in this way contained 1.5 millimols of magnesium per gramme of silica.

Over 25 minutes there was added in slowly 72 millimols of HMDS at the temperature of 23°C. The mixture obtained in this way was agitated for 1 hour at 23°C. In this way a solid product (F) was obtained.

Then the reactor containing the solid product (F) in suspension in 600 ml of n-hexane was heated to 50°C. Whilst being agitated, the reactor was charged slowly over 30 minutes with 90 millimols of tertbutyl chloride. At the end of this time, the mixture was agitated for one hour at 50°C, and then cooled down to the ambient temperature (23°C). The solid product (G) obtained contains (per gramme of silica) 1.4 millimols of magnesium and 1.4 millimols of chlorine.

The reactor was then heated to 50°C and into it was added slowly over one hour 30 millimols of titanium tetrachloride. The mixture obtained was then agitated for one hour at 50°C, and then cooled down to the ambient temperature (23°C). The solid product (H) obtained contains (per gramme of silica) 1.3 millimols of magnesium, 2.4 millimols of chlorine and 0.55 millimols of titanium.

### Example 4 (Comparative)

### Polymerisation of ethylene in a reactor with mechanically agitated bed

The procedure was carried out precisely as in Example 2 for polymerisation, except that 1.0 g of the catalyst (H) was introduced in place of 1.0 g of the catalyst (D). At the end of 2 hours 28 minutes of polymerisation, 600 g of a polyethylene having a MI2.16 of 4.37 g/10 minutes and a molecular weight distribution of 4.1 was recovered.

### Example 5 (Comparative)

### Preparation of a Catalyst (K)

The procedure was carried out precisely as in Example 3 for the preparation of the solid (E).

The reactor containing the solid product (E) in suspension in 600 ml of n-hexane was heated to 50°C. Whilst being agitated, the reactor was charged slowly over one hour with 180 millimols of tertbutyl chloride. At the end of this time, the mixture was agitated for one hour at 50°C, then cooled down to ambient temperature (23°C). The solid product (I) obtained contains (per gramme of silica) 1.4 millimols of magnesium, 2.8 millimols of chlorine and had no basic reduction function vis-a-vis titanium tetrachloride.

There was then added slowly over 25 minutes 72 millimols of hexamethyldisilazane (HMDS) at a temperature of 23°C. The mixture obtained this way was agitated for one hour at 23°C. The solid product (J) obtained in this way was washed three times with 600 ml of n-hexane at 23°C ; it contains (per gramme of silica) 1.4 millimols of magnesium and 2.6 millimols of chlorine.

The reactor was then heated to 50°C and into it was added slowly over one hour 30 millimols of titanium tetrachloride. The mixture obtained was then agitated for one hour at 50°C, then cooled down to the ambient temperature (23°C). The solid product (K) obtained contains (per gramme of silica) 1.3 millimols of magnesium, 2.9 millimols of chlorine and 0.53 millimols of tetravalent titanium.

### Example 6 (Comparative)

### Polymerisation of ethylene in a reactor with mechanically agitated bed

The procedure was carried out precisely as in Example 2 for polymerisation, except that 1.0 g of the catalyst (K) was introduced in place of 1.0 g of the catalyst (D). At the end of 2 hours 27 minutes of polymerisation, 600 g of a polyethylene having a MI2.16 of 5.70 g/10 minutes and a molecular weight distribution of 3.9 was recovered.

### Example 7 (Comparative)

### Preparation of a Catalyst (L)

The procedure was carried out precisely as in Example 5 for the preparation of the solid (I). The reactor was then heated to 50°C and into it was added slowly over 1 hour 30 millimols of titanium tetrachloride. The mixture obtained was then agitated for one hour at 50°C, then cooled down to ambient temperature (23°C). Then to the mixture was added 72 millimols of HMDS. The solid product (L) obtained contained (per gramme of silica) 1.5 millimols of magnesium, 3.1 millimols of chlorine and 0.52 millimols of tetravalent titanium.

### Example 8 (Comparative)

### Polymerisation of ethylene in a reactor with mechanically agitated bed

The procedure was carried out precisely as in Example 2 for polymerisation, except that 1.0 g of the catalyst (L) was introduced in place of 1.0 g of the catalyst (D). At the end of 2 hours 33 minutes of polymerisation, 600 g of a polyethylene having a MI2.16 of 4.54 g/10 minutes and a molecular weight distribution of 4.2, was recovered.

### Example 9 (Comparative)

### Preparation of a Catalyst (o)

A granular carrier made up of a silica powder "SG332" (R) sold by the Company GRACE (Germany) having a specific surface (BET) of 325 m2/g and a pore volume of 1.84 ml/g was used. It was made up of particles having a weight-average diameter of 77 µm. It was dried for 5 hours at 500°C. The following operations were carried out in an inert nitrogen atmosphere. In a 1 litre stainless steel reactor, equipped with an agitator rotating at 250 rpm, there was added 600 ml of n-hexane, 60 g of dried silica and over one hour 190 millimols of dibutylmagnesium, at a temperature of 23°C. The solid product (M) obtained in this way was washed three times with 600 ml of n-hexane at 23°C and after such washings contained 1.7 millimols of magnesium per gramme of silica.

The reactor containing the solid product (M) in suspension in 600 ml of n-hexane was heated to 50°C. Whilst being agitated, there was fed into the reactor slowly over one hour 204 millimols of tertbutyl chloride. At the end of this time, the mixture was agitated for one hour at 50°C, then cooled down to the ambient temperature (23°C). The solid product (N) obtained was washed three times with 600 ml of n-hexane at 23°C. After such washings, it contained (per gramme of silica) 1.7 millimols of magnesium, 2.7 millimols of chlorine and had no basic reduction function vis-a-vis titanium tetrachloride.

The reactor was then heated to 50°C and into it was fed slowly over 1 hour 45 minutes 50.1 millimols of titanium tetrachloride. The mixture obtained was then agitated for one hour at 50°C, then cooled down to ambient temperature (23°C). The solid product (O) obtained was washed three times with 600 ml of n-hexane at 23°C. After such washings, it contained (per gramme of silica) 1.7 millimols of magnesium, 4.8 millimols of chlorine and only 0.54 millimols of titanium in the tetravalent state only.

### Example 10 (Comparative)

### Polymerisation of ethylene in a reactor with mechanically agitated bed

The procedure was carried out exactly as in Example 2 for polymerisation, except that 1.0 g of the catalyst (O) was introduced in place of 1.0 g of the catalyst (D). At the end of 3 hours 20 minutes, 600 g of a polyethylene having a MI2.16 of 2.75 g/10 minutes and a molecular weight distribution of 5.0, was recovered.

### Example 11

### a) Preparation of a catalyst

The operation was carried out in a reactor containing a fluidized bed consisting essentially of a vertical cylinder 75 cm in height and 5 cm in diameter underneath a disengagement chamber. This reactor was equipped with a fluidization soleplate consisting of a porous material located in the lower part of the cylinder. It was also equipped with an electrical resistance heater and a fluidizing gas feed.

Into the reactor, which was maintained at 60°C and fed with a fluidizing gas consisting of nitrogen containing less than 2 vpm of water vapour, which travelled at an upward velocity of 12 cm/s, were introduced 60 g of microspheroidal silica sold under the trade name "ES 70" R by Joseph Crosfield and Sons (UK). It consisted of spheroidal particles which had a mass-average diameter of 45 microns. It was dried for 8 hours at 900°C. The following operations were performed under a nitrogen atmosphere.

600 ml of n-hexane, 60 g of predried spherical silica and 48 millimols of HMDS were introduced at a temperature of 23°C into a 1-litre stainless steel reactor fitted with a stirring device rotating at 250 revolutions per minute. The mixture thus obtained was stirred at 80°C for 4 hours. The solid product (A) thus obtained was washed three times with 600 ml of n-hexane at 50°C.

48 millimols of dibutylmagnesium were then introduced during 30 minutes at a temperature of 50°C into the reactor containing the solid product (A) in suspension in 600 ml of n-hexane. The mixture thus obtained was stirred at 50°C for 1 hour. The solid product (B) thus obtained contained 0.8 millimols of magnesium per gram of silica. The reactor containing the solid product (B) in suspension in 600 ml of n-hexane was then heated to 50°C. 96 millimols of tertbutyl chloride were introduced into the reactor over 30 minutes, with stirring. At the end of this time the mixture was stirred at 50°C for 1 hour. The solid product (C) obtained was washed three times with 600 ml of n-hexane at 50°C and, after these washings, contained, (per gram of silica) 0.8 millimols of magnesium, 1.6 millimols of chlorine and no basic functional group which is reductive towards a tetravalent titanium compound. The reactor was next heated to 50°C and 4.8 millimols of triethyl orthoacetate were introduced over 15 minutes into the reactor containing the solid product (C) in suspension in 600 ml of n-hexane. At the end of this time, the mixture was stirred at 50°C for 30 minutes. The reactor was then heated to 50°C and 19.2 millimols of trimethylaluminium were introduced into it over 30 minutes. The mixture obtained was next stirred at 50°C for 30 minutes. The reactor was next heated to 50°C and 9.6 millimols of diisopropoxytitanium dichloride were introduced into it over 30 minutes. The mixture obtained was next stirred at 50°C for 1 hour and was then cooled to a temperature of about 20°C. The solid catalyst obtained contained (per gram of silica) 0.8 millimols of magnesium, 1.6 millimols of chlorine and 0.16 millimols of titanium.

### b) Copolymerization of ethylene in suspension

1 litre of perfectly anhydrous n-hexane was introduced into a 2.6-litre stainless steel reactor maintained at 0.1 MPa of nitrogen and equipped with a stirrer rotating at 700 revolutions per minute, followed by 6 millimols of trimethylaluminium, a quantity of catalyst prepared above corresponding to 0.1 millimol of titanium, and 80 ml of 4-methyl-1-pentene. The reactor was heated to 80°C and hydrogen was introduced into it until a total pressure of 0.16 MPa was obtained, followed by ethylene until a total pressure of 0.40 MPa was obtained. Ethylene was next introduced in order to maintain the total pressure at 0.40 MPa. At the end of 40 minutes copolymerization 150 g of a copolymer were recovered, which has :
- a melt index MI2.16 of 0.86 g/10 minutes
- a flow parameter n of 1.49, calculated using the formula n = log(MI21.6/MI2.16)/log(21.6/2.16) in which MI21.6 is the melt index of the polymer, measured at 190°C under a 21.6 kg load.
- a relative density of 0.933
- a 4-methyl-1-pentene weight content of 4.7 % and
- a molecular weight distribution of 3.9.

### Example 12

### a) Preparation of a catalyst

Microspheroidal silica powder sold under the tradename "ES 70" R by Joseph Crosfield and Sons (UK) was subjected for 12 hours to a heat treatment at 870°C in a reactor containing a fluidized bed through which a stream of dry nitrogen was passed. After the heat treatment the dried silica powder obtained was cooled to a temperature of about 20°C and was kept under a nitrogen atmosphere.

20 kg of predried silica and n-hexane in order to obtain 110 litres of suspension were introduced at ambient temperature into a 240-litre stainless steel reactor fitted with a stirring device rotating at 166 revolutions per minute, followed, at a temperature of 50°C, by 16 mols of HMDS. The suspension thus obtained was kept stirred at 80°C for 4 hours. It contained a solid (D) which was washed five times with 130 litres of n-hexane at 50°C.

30 mols of dibutylmagnesium were next introduced into the reactor at a temperature of 50°C and over 2 hours. The suspension obtained was kept stirred at 50°C for 1 hour. It contained a solid product (E) containing 1.5 millimols of magnesium per gram of silica.

The reactor containing the solid product (E) in suspension in n-hexane was then heated to 50°C and 60 mols of tertbutyl chloride were introduced into the reactor over 2 hours. At the end of this time the suspension obtained was stirred at 50°C for 1 hour. It contained a solid product (F), which was washed three times with 130 litres of n-hexane at 50°C.

The reactor was then heated to 50°C and 6.0 moles of triethyl orthoacetate were introduced rapidly into it. The suspension obtained was kept stirred at 50°C for 1 hour.

12 mols of trimethylaluminium were then introduced into the reactor at 50°C. The suspension obtained was stirred at 80°C for 2 hours. The reactor was cooled to 50°C and 3.0 mols of titanium tetra-n-butoxide and 3.0 mols of titanium tetrachloride were introduced into it over 1 hour. The suspension obtained was then stirred at 80°C for 2 hours and was then cooled to a temperature of about 20°C. It contained a catalyst, which was washed five times with 130 litres of n-hexane at 20°C. The catalyst obtained contained, (per gram of silica) 1.5 millimols of magnesium, 3 millimols of chlorine and 0.30 millimols of titanium.

### b) Copolymerization of ethylene and 1-butene in a noncontinuous reactor containing a fluidized bed

The operation was carried out in a reactor containing a fluidized bed 15 cm in diameter, fitted with a compressor for recycling the fluidizing gas. To form an initial fluidized bed, 1000 g of a polymer powder originating from a preceding reaction and which had a relative density of 0.916, a MI2.16 of 1.63 g/10 minutes and a bulk density of 0.39 g/cm3 were introduced into this reactor. The whole reactor was then purged for 3 hours with dry nitrogen at a temperature of 95°C. The reactor was then filled with a mixture of ethylene, 1-butene and hydrogen. In this mixture the partial pressures of the constituents were:
ethylene 0.54 MPa
hydrogen 0.15 MPa
1-butene 0.21 MPa

The fluidizing velocity of the gas mixture was maintained at 25 cm/s and the temperature of the fluidizing gas was maintained at 80°C.

35 millimols of trimethylaluminium and a quantity of catalyst prepared previously, corresponding to 0.33 millimols of titanium, were then introduced into the reactor. The total pressure of the gas mixture was kept constant by introducing ethylene into the reactor. At the end of the copolymerization the reactor was cooled, degassed and finally purged with nitrogen. A copolymer powder was obtained, which had:
- a relative density of 0.919
- a MI2.16 of 1 g/10 minutes and
- a bulk density of 0.41 g/cm3.

### Example 13

### a) Preparation of a prepolymer

Into a metal reactor of 1-m3 capacity, equipped with a jacket and a stirrer rotating at 140 revolutions per minute, were introduced in succession 450 litres of n-hexane, 15 g of an antistatic composition "ASA-3" sold by Shell (Holland) containing 0.55 % by weight of chromium and calcium, a quantity of catalyst prepared as in Example 12 (a) corresponding to 2.0 mols of titanium, and 8.0 mols of tri-n-octylaluminium. The catalyst suspension thus prepared was heated to 70°C and ethylene was then introduced at a steady flow rate of 15 kg/h for 5 hours and 20 minutes. At the end of the prepolymerization reaction the prepolymer suspension obtained was cooled to 60°C. 80 kg of prepolymer were recovered, with excellent dry flow properties, a weight-average diameter of 90 microns and a bulk density of 0.45 g/ml.

### b) Gas phase copolymerization of ethylene and 1-hexene

100 kg of a perfectly anhydrous polyethylene powder were introduced, under a nitrogen atmosphere, as a powder charge originating from a preceding reaction into a reactor containing a fluidized bed 45 cm in diameter. A gas mixture heated to 80°C, consisting of hydrogen, ethylene, 1-hexene and nitrogen and propelled at an upward velocity of 44 cm/s was then introduced into it. The partial pressures of the constituents of this mixture were:
hydrogen 0.07 MPa
ethylene 0.325 MPa
1-hexene 0.058 MPa
nitrogen 0.85 MPa

The prepolymer obtained above, at a rate of 120 g per hour, and triethylaluminium, at a rate of 24 millimols per hour, were then introduced into this reactor. After stabilization of the polymerization conditions a copolymer powder was obtained at a rate of 16 kg/h, which had:
a bulk density of 0.40 g/cm3
a MI2.16 of 0.9 g/10 minutes
a flow parameter n of 1.5
a relative density of 0.918
a weight-average diameter of 600 microns
a content of fines with a diameter of less than 125 microns of 0.4 % by weight
a titanium content of 9 ppm
a molecular weight distribution of 3.9

## Claims

1. A process for the preparation of a Ziegler-Natta type catalyst having a granular support based on a refractory oxide characterised in that the process comprises contacting the granular support with:
(a) an organosilicon compound,
(b) a dialkylmagnesium and optionally a trialkylaluminium compound,
(c) a monochloro-organic compound, and
(d) with at least one tetravalent titanium compound in which the contact between the support and the organosilicon compound is the first step in the preparation of the catalyst and the contact step between the support and the dialkylmagnesium and optionally the trialkylaluminium compound is performed following the contact between the support and the organosilicon compound.

2. A process according to Claim 1, characterised in that the organosilicon compound is, diethoxydimethylsilane, methyltrimethoxysilane, methyltriethoxysilane, tetraethoxysilane or hexamethyldisilazane.

3. A process according to Claims 1 or 2,
characterised in that the process comprises a contact step between the granular support and an electron-donor compound.

4. A process according to Claim 3, characterised in that the electron-donor compound is selected from the group comprising tetrahydrofuran, dimethylformamide, triethylorthoacetate and tetraethoxysilane.

5. A process according to any one of Claims 1 to 4, characterised in that the process comprises contacting the granular support with an organometallic compound.

6. A process according to Claim 5, characterised in that the organometallic compound is trimethylaluminium or dimethylaluminium chloride.

7. A process for the preparation of a Ziegler-Natta type catalyst having a granular support based on a refractory oxide comprising:
- (a) contacting the granular support with an organosilicon compound,
- (b) contacting the support resulting from step (a) with a dialkylmagnesium and optionally a trialkylaluminium compound,
- (c) contacting the support resulting from step (b) with a monochloro-organic compound, and
- (d) contacting the support resulting from step (c) with a tetravalent titanium compound.

8. A process for the preparation of a Ziegler-Natta type catalyst having a granular support based on a refractory oxide comprising:
- (a) contacting the granular support with an organosilicon compound,
- (b) contacting the support resulting from step (a) with a dialkylmagnesium and optionally a trialkylaluminium compound,
- (c) contacting the support resulting from step (b) with a monochloro-organic compound,
- (d) contacting the support resulting from step (c) with an electron-donor compound,
- (e) contacting the support resulting from step (d) with an organometallic compound, and
- (f) contacting the support resulting from step (e) with a tetravalent titanium compound.

9. A catalyst obtainable by the process according to any one of Claims 1 to 8.

10. Use of the catalyst according to Claim 9, for polymerising or copolymerising an olefin.

11. Use according to Claim 10, characterised in that the catalyst is used in the presence of trimethylaluminium as cocatalyst.

12. Use according to Claim 10 or 11, for producing a polymer having a bulk density between 0.37 to 0.50 g/cm3.

13. A process according to any one of claims 1 to 8, characterised in that the granular support is contacted with a dialkylmagnesium compound mixed or complexed with a trialkylaluminium compound.

## Patentansprüche

1. Verfahren zur Herstellung eines Katalysators vom Ziegler-Natta-Typ mit einem körnigen Träger auf der Basis eines Feuerfestoxids, dadurch gekennzeichnet, daß das Verfahren ein Inkontaktbringen des körnigen Trägers mit
(a) einer Organosiliciumverbindung,
(b) einer Dialkylmagnesium- und gegebenenfalls einer Trialkylaluminiumverbindung,
(c) einer organischen Monochlorverbindung und
(d) mindestens einer vierwertigen Titanverbindung umfaßt,
wobei das Inkontaktbringen des Trägers mit der Organosiliciumverbindung die erste Stufe bei der Herstellung des Katalysators und die Stufe des Inberührungbringens des Trägers mit der Dialkylmagnesium- und gegebenenfalls der Trialkylaluminiumverbindung nach Inkontaktbringen des Trägers mit der Organosiliciumverbindung erfolgt.

2. Verfahren nach Anspruch 1, dadurch gekennzeichnet, daß die Organosiliciumverbindung Diethoxydimethylsilan, Methyltrimethoxysilan, Methyltriethoxysilan, Tetraethoxysilan oder Hexamethyldisilazan ist.

3. Verfahren nach Anspruch 1 oder 2, dadurch gekennzeichnet, daß das Verfahren eine Stufe eines Inkontaktbringens des körnigen Trägers mit einer Elektronendonorverbindung umfaßt.

4. Verfahren nach Anspruch 3, dadurch gekennzeichnet, daß die Elektronendonorverbindung unter Tetrahydrofuran, Dimethylformamid, Triethylorthoacetat und Triethoxysilan ausgewählt ist.

5. Verfahren nach einem der Ansprüche 1 bis 4, dadurch gekennzeichnet, daß das Verfahren ein Inkontaktbringen des körnigen Trägers mit einer Organometallverbindung umfaßt.

6. Verfahren nach Anspruch 5, dadurch gekennzeichnet, daß die Organometallverbindung Trimethylaluminium oder Dimethylaluminiumchlorid ist.

7. Verfahren zur Herstellung eines Katalysators vom Ziegler-Natta-Typ mit einem körnigen Träger auf der Basis eines Feuerfestoxids, das die folgenden Stufen umfaßt:
(a) Inkontaktbringen des körnigen Trägers mit einer Organosiliciumverbindung,
(b) Inkontaktbringen des in Stufe (a) erhaltenen Trägers mit einer Dialkylmagnesium- und gegebenenfalls einer Trialkylaluminiumverbindung,
(c) Inkontaktbringen des in Stufe (b) erhaltenen Trägers mit einer organischen Monochlorverbindung und
(d) Inkontaktbringen des in Stufe (c) erhaltenen Trägers mit einer vierwertigen Titanverbindung.

8. Verfahren zur Herstellung eines Katalysators vom Ziegler-Natta-Typs mit einem körnigen Träger auf der Basis eines Feuerfestoxids, das die folgenden Stufen umfaßt:
(a) Inkontaktbringen des körnigen Trägers mit einer Organosiliciumverbindung,
(b) Inkontaktbringen des in Stufe (a) erhaltenen Trägers mit einer Dialkylmagnesium- und gegebenenfalls einer Trialkylaluminiumverbindung,
(c) Inkontaktbringen des in Stufe (b) erhaltenen Trägers mit einer organischen Monochlorverbindung,
(d) Inkontaktbringen des in Stufe (c) erhaltenen Trägers mit einer Elektronendonorverbindung,
(e) Inkontaktbringen des in Stufe (d) erhaltenen Trägers mit einer Organometallverbindung und
(f) Inkontaktbringen des in Stufe (e) erhaltenen Trägers mit einer vierwertigen Titanverbindung.

9. Katalysator, erhältlich nach einem Verfahren gemäß einem der Ansprüche 1 bis 8.

10. Verwendung des Katalysators gemäß Anspruch 9 zur Polymerisation oder Copolymerisation eines Olefins.

11. Verwendung nach Anspruch 10, dadurch gekennzeichnet, daß der Katalysator in Gegenwart von Trimethylaluminium als Cokatalysator verwendet wird.

12. Verwendung nach Anspruch 10 oder 11 zur Herstellung eines Polymers mit einer Schüttdichte von 0,37 bis 0,50 g/cm³.

13. Verfahren nach einem der Ansprüche 1 bis 8, dadurch gekennzeichnet, daß der körnige Träger mit einer Dialkylmagnesiumverbindung in Berührung gebracht wird, die mit einer Trialkylaluminiumverbindung vermischt oder komplexiert ist.

## Revendications

1. Procédé pour la préparation d'un catalyseur de type Ziegler-Natta ayant un support granulaire à base d'oxyde réfractaire, caractérisé en ce que le procédé consiste à mettre en contact le support granulaire avec:
(a) un composé organosilicique;
(b) un composé dialkylmagnésien et, éventuellement, un composé trialkylaluminique;
(c) un composé monochloro-organique; et
(d) au moins un composé de titane tétravalent, dans lequel le contact entre le support et le composé organosilicique est la première étape dans la préparation du catalyseur et l'étape de contact entre le support et le composé dialkylmagnésien et, éventuellement, le composé trialkylaluminique est réalisée à la suite du contact entre le support et le composé organosilicique.

2. Procédé selon la revendication 1, caractérisé en ce que le composé organosilicique est le diéthoxydiméthylsilane, le méthyltriméthoxysilane, le méthyltriéthoxysilane, le tétraéthoxysilane ou l'hexaméthyldisilazane.

3. Procédé selon l'une des revendications 1 ou 2, caractérisé en ce que le procédé comprend une étape de contact entre le support granulaire et un composé donneur d'électrons.

4. Procédé selon la revendication 3, caractérisé en ce que le composé donneur d'électrons est choisi dans le groupe formé par le tétrahydrofuranne, le diméthylformamide, le triéthylorthoacétate et le tétraéthoxysilane.

5. Procédé selon l'une des revendications 1 à 4, caractérisé en ce que le procédé comprend la mise en contact du support granulaire avec un composé organométallique.

6. Procédé selon la revendication 5, caractérisé en ce que le composé organométallique est le chlorure de triméthylaluminium ou de diméthylaluminium.

7. Procédé pour la préparation d'un catalyseur de type Ziegler-Natta ayant un support granulaire à base d'oxyde réfractaire, consistant:
(a) à mettre en contact le support granulaire avec un composé organosilicique;
(b) à mettre en contact le support obtenu à l'étape (a) avec un composé dialkylmagnésien et éventuellement un composé trialkylaluminique;
(c) à mettre en contact le support obtenu à l'étape (b) avec un composé monochloro-organique; et
(d) à mettre en contact le support obtenu à l'étape (c) avec un composé de titane tétravalent.

8. Procédé pour la préparation d'un catalyseur de type Ziegler-Natta ayant un support granulaire à base d'oxyde réfractaire consistant:
(a) à mettre en contact le support granulaire avec un composé organosilicique;
(b) à mettre en contact le support obtenu à l'étape (a) avec un composé dialkylmagnésien et, éventuellement, un composé trialkylaluminique;
(c) à mettre en contact le support obtenu à l'étape (b) avec un composé monochloro-organique;
(d) à mettre en contact le support obtenu à l'étape (c) avec un composé donneur d'électrons;
(e) à mettre en contact le support obtenu à l'étape (d) avec un composé organométallique; et
(f) à mettre en contact le support obtenu à l'étape (e) avec un composé de titane tétravalent.

9. Catalyseur susceptible d'être obtenu par le procédé selon l'une des revendications 1 à 8.

10. Utilisation du catalyseur selon la revendication 9, pour polymériser ou copolymériser une oléfine.

11. Utilisation selon la revendication 10, caractérisée en ce que le catalyseur est utilisé en présence de triméthylaluminium en tant que cocatalyseur.

12. Utilisation selon l'une des revendications 10 ou 11, pour produire un polymère ayant une densité apparente comprise entre 0,37 et 0,50 g/cm³.

13. Procédé selon l'une des revendications 1 à 8, caractérisé en ce que le support granulaire est mis en contact avec un composé dialkylmagnésien mélangé ou complexé avec un composé trialkylaluminique.
